(19) Europäisches Patentamt
European Patent Office
Office européen des brevets

(11) **EP 4 703 190 A1**

(12) **EUROPEAN PATENT APPLICATION**
published in accordance with Art. 153(4) EPC

(43) Date of publication:
**04.03.2026 Bulletin 2026/10**

(21) Application number: **24795516.4**

(22) Date of filing: **02.02.2024**

(51) International Patent Classification (IPC):
**B60L 58/12** (2019.01)     **B60R 16/023** (2006.01)

(52) Cooperative Patent Classification (CPC):
Y02T 10/70

(86) International application number:
**PCT/CN2024/075620**

(87) International publication number:
**WO 2024/222127 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 CN 202310487183**

(71) Applicant: **Chongqing Changan Automobile Co., Ltd.**
**Chongqing 400023 (CN)**

(72) Inventors:
• **LI, Jingyuan**
**Chongqing 400023 (CN)**
• **WANG, Zhengang**
**Chongqing 400023 (CN)**
• **LUAN, Aidong**
**Chongqing 400023 (CN)**
• **YANG, Fan**
**Chongqing 400023 (CN)**
• **LI, Ming**
**Chongqing 400023 (CN)**

(74) Representative: **Barker Brettell LLP**
**100 Hagley Road**
**Edgbaston**
**Birmingham B16 8QQ (GB)**

(54) **BATTERY THERMAL MANAGEMENT METHOD AND APPARATUS, ELECTRONIC DEVICE, AND STORAGE MEDIUM**

(57) A battery thermal management method and apparatus, an electronic device, and a storage medium are provided. The method includes: estimating first electricity consumption required for a vehicle to travel a navigation distance; estimating second electricity consumption of a passenger compartment during the vehicle's travel of the navigation distance; if a response signal indicating that charging is permitted is received within a preset duration after the charging request signal is generated, then estimating third electricity consumption required for a thermal management system on the vehicle to adjust a temperature of a power battery to be within the preset temperature range during the travel of the navigation distance; if the sum of the first electricity consumption, the second electricity consumption, and the third electricity consumption is less than or equal to the remaining charge amount, controlling the thermal management system to adjust the temperature of the power battery to be within the preset temperature range. Thus, it helps improve the reliability and safety of pre-control over the temperature of the power battery.

Rule 91,
19.09.2024

| Acquiring battery parameters of a power battery in a vehicle and a navigation distance between the vehicle and a charging pile, where the battery parameters include a remaining charge amount and a battery temperature | 110 |

| Estimating, based on the remaining charge amount, remaining mileage that the power battery supports the vehicle to travel and first electricity consumption required for the vehicle to travel the navigation distance | 120 |

| Estimating, based on a set temperature of a passenger compartment of the vehicle, second electricity consumption of the passenger compartment during the vehicle's travel of the navigation distance | 130 |

| When the remaining charge amount is less than or equal to a first preset charge amount, or the remaining mileage is less than or equal to first preset mileage, generating a charging request signal through a controller on the vehicle | 140 |

| If a response signal indicating that charging is permitted is received within a preset duration after the charging request signal is generated, and the battery temperature is not within a preset temperature range, then estimating third electricity consumption required for a thermal management system on the vehicle to adjust a temperature of the power battery to be within the preset temperature range during the travel of the navigation distance | 150 |

| If a sum of the first electricity consumption, the second electricity consumption, and the third electricity consumption is less than or equal to the remaining charge amount, controlling the thermal management system to adjust the temperature of the power battery to be within the preset temperature range | 160 |

FIG. 3

## Description

The present application claims priority to Chinese patent application No. 202310487183.3, filed with the China National Intellectual Property Administration on April 28, 2023 and entitled "BATTERY THERMAL MANAGEMENT METHOD AND APPARATUS, ELECTRONIC DEVICE, AND STORAGE MEDIUM", the disclosure of which is hereby incorporated by reference in its entirety.

## TECHNICAL FIELD

The present application relates to the field of electric vehicle technologies, and more particularly, to a battery thermal management method and apparatus, an electronic device, and a storage medium.

## BACKGROUND

With the increasing maturity of new energy vehicle technologies, more and more users are choosing new energy vehicles. However, the primary concerns for users when choosing new energy vehicles are charging duration and traveling range after a full charge. Batteries used for new energy vehicles in the on-site market are mostly made of ternary lithium or lithium iron phosphate as the main raw materials. The characteristics of the raw materials determine that charging and discharging characteristics are inconsistent at different temperatures.

When a battery is charged in a high-temperature environment, it generates a large amount of heat, especially under a fast charging condition, and due to the increase in current or voltage, the heat generated by the battery will increase dramatically. At this time, it is desired for the initial temperature of the battery to be at a relatively low level, and at the same time, it is desired for the battery to exchange heat with the outside as quickly as possible during charging, so as to reduce the temperature rise caused by charging. Therefore, as the battery temperature rises, in order to ensure the safety of charging, the charging power will be adjusted based on the actual temperature of the battery.

When the ambient temperature is low, battery activity is poor. If charging is carried out in a low-temperature environment, the charging power cannot be increased due to the inherent characteristics of the battery. Therefore, in this condition, it is desirable for the temperature of the battery to be at a relatively high level to ensure battery activity, facilitate high-power charging and reduce charging duration.

Pre-controlling the battery temperature before charging helps shorten the charging time during vehicle charging. At present, during the traveling process to a charging pile for charging, electric vehicles cannot pre-control the temperature of the power battery while ensuring safe traveling.

## SUMMARY

In view of this, an objective of embodiments of the present application is to provide a battery thermal management method and apparatus, an electronic device, and a storage medium, which can address the problem of inability to pre-control the temperature of the power battery while ensuring safe traveling.

To achieve the above objective, the technical solution adopted in the present application is as follows.

In a first aspect, the present application provides a battery thermal management method, where the method includes:

acquiring battery parameters of a power battery in a vehicle and a navigation distance between the vehicle and a charging pile, where the battery parameters include a remaining charge amount and a battery temperature;

estimating, based on the remaining charge amount, remaining mileage that the power battery supports the vehicle to travel, and first electricity consumption required for the vehicle to travel the navigation distance;

estimating, based on a set temperature of a passenger compartment of the vehicle, second electricity consumption of the passenger compartment during the vehicle's travel the navigation distance;

when the remaining charge amount is less than or equal to the first preset charge amount, or the remaining mileage is less than or equal to first preset mileage, generating a charging request signal through a controller on the vehicle;

if a response signal indicating that charging is permitted is received within a preset duration after the charging request signal is generated, and the battery temperature is not within a preset temperature range, then estimating third electricity consumption required for a thermal management system on the vehicle to adjust a temperature of the power battery to be within the preset temperature range during the travel of the navigation distance;

if a sum of the first electricity consumption, the second electricity consumption, and the third electricity consumption is less than or equal to the remaining charge amount, controlling the thermal management system to adjust the temperature of the power battery to be within the preset temperature range.

In combination with the first aspect, in some optional implementations, estimating, based on the remaining charge amount, the remaining mileage that the power battery supports the vehicle to travel, and the first electricity consumption required for the vehicle to travel the navigation distance, includes:

calculating, based on first power consumption of the vehicle at a first specified vehicle speed, and the remaining charge amount, a first duration required for the vehicle to deplete the remaining charge amount when traveling at the first specified vehicle speed, and determining, based on the first duration and the first specified vehicle speed, the remaining mileage;

calculating, according to the navigation distance and a second specified vehicle speed, a second duration required for the vehicle to travel the navigation distance, and determining, based on pre-calibrated second power consumption corresponding to the second specified vehicle speed, and the second duration, the first electricity consumption required for the vehicle to travel the navigation distance.

In combination with the first aspect, in some optional implementations, estimating the third electricity consumption required for the thermal management system on the vehicle to adjust the temperature of the power battery to be within the preset temperature range during the travel of the navigation distance includes:

determining, according to a minimum temperature difference between the battery temperature of the power battery and the preset temperature range, and a specific heat capacity of the power battery, a total amount of heat required to adjust the temperature of the power battery to be within the preset temperature range;

determining, based on heat exchange efficiency between the thermal management system and the power battery, and the total amount of heat, the third electricity consumption.

In combination with the first aspect, in some optional implementations, before step of estimating the third electricity consumption required for the thermal management system on the vehicle to adjust the temperature of the power battery to be within the preset temperature range during the travel of the navigation distance, the method further includes:

determining, based on a preset mapping relationship between temperature values and temperature intervals, a temperature interval where the battery temperature is located as a target temperature interval;

deciding whether the battery temperature is within the preset temperature range corresponding to the target temperature interval, and acquiring a decision result that indicates whether the battery temperature is within the preset temperature range.

In combination with the first aspect, in some optional implementations, acquiring the battery parameters of the power battery in the vehicle and the navigation distance between the vehicle and the charging pile includes:

acquiring the battery parameters of the power battery through sensing components on the vehicle, where the sensing components include a temperature sensor and a charge amount sensor;

acquiring the navigation distance between the vehicle and the charging pile from a server through a communication module on the vehicle.

In combination with the first aspect, in some optional implementations, the method further includes:

if the sum of the first electricity consumption, the second electricity consumption, and the third electricity consumption is greater than the remaining charge amount, controlling the thermal management system not to operate;

when a trigger signal indicating that the power battery starts charging is received, controlling operation of the thermal management system to adjust the temperature of the power battery to be within the preset temperature range.

In combination with the first aspect, in some optional implementations, the method further includes:
if a response signal corresponding to the charging request signal is received within the preset duration after the charging request signal is generated, and the battery temperature is within the preset temperature range, controlling the thermal management system not to operate.

In combination with the first aspect, in some optional implementations, the method further includes:
when the remaining charge amount is less than or equal to a second preset charge amount, or the remaining mileage is less than or equal to second preset mileage, outputting an alarm prompt indicating a low charge amount, where the second preset charge amount is less than the first preset charge amount, and the second preset mileage is less than the first preset mileage.

In combination with the first aspect, in some optional implementations, the method further includes:
if a response signal indicating that charging is permitted is not received within the preset duration after the charging request signal is generated, controlling the thermal management system not to operate.

In a second aspect, an embodiment of the present application further provides a battery thermal management apparatus, and the apparatus includes:

an acquiring unit, configured to acquire battery parameters of a power battery in a vehicle and a navigation distance between the vehicle and a charging pile, where the battery parameters include a remaining charge amount and a battery temperature;

a first estimating unit, configured to estimate, based on the remaining charge amount, remaining mileage that the power battery supports the vehicle to travel, and first electricity consumption required for the vehicle to travel the navigation distance;

a second estimating unit, configured to estimate, based on a set temperature of a passenger compartment of the vehicle, second electricity consumption of the passenger compartment during the vehicle's travel of the navigation distance;

a signal generating unit, configured to generate a charging request signal through a controller on the vehicle, when the remaining charge amount is less than or equal to the first preset charge amount, or the remaining mileage is less than or equal to first preset mileage;

a third estimating unit, configured to estimate third electricity consumption required for a thermal management system on the vehicle to adjust a temperature of the power battery to be within a preset temperature range during the travel of the navigation distance, if a response signal indicating that charging is permitted is received within a preset duration after the charging request signal is generated, and the battery temperature is not within the preset temperature range;

a thermal management unit, configured to control the thermal management system to adjust the temperature of the power battery to be within the preset temperature range, if a sum of the first electricity consumption, the second electricity consumption, and the third electricity consumption is less than or equal to the remaining charge amount.

In a third aspect, an embodiment of the present application further provides an electronic device, where the electronic device includes a processor and a memory coupled to each other, the memory stores a computer program, which, when executed by the processor, causes the electronic apparatus to execute the above method.

In a fourth aspect, an embodiment of the present application further provides a computer-readable storage medium, where the computer-readable storage medium stores a computer program, which, when running on a computer, causes the computer to execute the above method.

The embodiments of the present application using the above technical solution has the following advantages:

in the technical solution provided in the present application, first electricity consumption required for a vehicle to travel a navigation distance is estimated, second electricity consumption of a passenger compartment during the vehicle's travel of the navigation distance is estimated; if a response signal indicating that charging is permitted is received within a preset duration after a charging request signal is generated, third electricity consumption required for a thermal management system on the vehicle to adjust a temperature of the power battery to be within a preset temperature range during the travel of the navigation distance is further estimated; and by comparing the remaining charge amount and the sum of the first electricity consumption, the second electricity consumption, and the third electricity consumption, the temperature of the power battery is pre-controlled. In this way, when the remaining charge amount is sufficient, the temperature of the power battery can be adjusted in advance when the vehicle is traveling to the charging pile, which facilitates improvement of charging efficiency. In addition, in the case where the remaining charge amount of the power battery is too low, it can avoid the safety risk of mid-trip parking due to the inability of the remaining charge amount to support the electric vehicle to travel to the charging pile caused by adjusting the temperature of the power battery in advance.

## BRIEF DESCRIPTION OF DRAWINGS

The present application can be further illustrated through non-limiting embodiments provided in the accompanying drawings. It should be understood that the following drawings merely show some embodiments of the present application, and should not be seen as a limitation on the scope. For the person skilled in the art, other relevant drawings can be obtained based on these drawings without creative labor.

FIG. 1 shows a schematic structural diagram of an electronic device provided by an embodiment of the present application.
FIG. 2 shows another schematic structural diagram of an electronic device provided by an embodiment of the present application.
FIG. 3 shows a schematic flowchart of a battery thermal management method provided by an embodiment of the present application.

## DESCRIPTION OF EMBODIMENTS

A detailed explanation of the present application is provided below in conjunction with the accompanying drawings and specific embodiments. It should be noted that in the accompanying drawings or description, similar or identical parts are labeled with the same reference numbers. Implementations not shown or described in the accompanying drawings are in forms known to the person skilled in the art. In the description of the present application, the terms "first", "second", etc. are only used to distinguish descriptions and should not be understood as indicating or implying relative importance.

First embodiment.

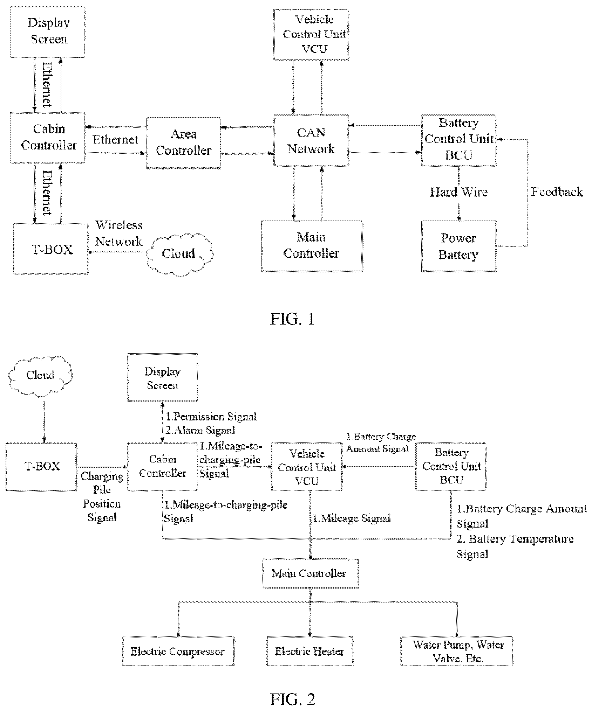

Please refer to FIG. 1. The embodiment of the present application provides an electronic device that may include a processing module and a storage module. The storage module stores a computer program, which, when executed by the processing module, enables the electronic device to perform corresponding steps in the battery thermal management method described below.

The processing module and the storage module can be independent modules or integrated into one unit. For example, the processing module and storage module can be integrated into a main controller.

When the processing module and the storage module exist as independent devices, the processing module can be an integrated circuit chip with signal processing capabilities. The above processing module can be a general-purpose processor. For example, the processor may be a central processing unit (Central Processing Unit, CPU), a digital signal processor (Digital Signal Processing, DSP), an application specific integrated circuit (Application Specific Integrated Circuit, ASIC), a field programmable gate array (Field Programmable Gate Array, FPGA), or other programmable logic devices, discrete gates or transistor logic devices, or discrete hardware components, which can implement or execute the disclosed methods, steps, and logic block diagrams in the embodiments of the present application.

The storage module can be, but is not limited to, random access memory, read-only memory, programmable read-only memory, erasable programmable read-only memory, electrically erasable programmable read-only memory, etc. In the present embodiment, the storage module can be used to store a remaining charge amount, a battery temperature, a preset duration, estimated first, second, and third electricity consumption, etc. Of course, the storage module can also be used to store a program, and the processing module executes the program after receiving an execution instruction.

In the present embodiment, the electronic device can be deployed in an electric vehicle. That is, the electronic device can also include a display screen, a cabin controller, a communication module (such as a telematics BOX (Telematics BOX, T-BOX)), an area controller, a vehicle control unit (Vehicle Control Unit, VCU), a battery control unit (Battery Control Unit, BCU), and a power battery.

The large screen and cabin controller are interconnected via Ethernet. The cabin controller and the T-BOX are connected via Ethernet. The T-BOX can establish a communication connection with a server through a wireless network. For example, the T-BOX can be connected with a cloud database of the server wirelessly. The cabin controller and the area controller are connected via Ethernet. The VCU communicates with the BCU and the main controller using a CAN network. Hard wire connection is adopted between the BCU and the power battery. The power battery feeds back signals inside the battery to the BCU.

It can be understood that the electronic device structure shown in FIG. 1 is only a schematic diagram, and the electronic device may also include more components than shown in FIG. 1. The components shown in FIG. 1 may be implemented using hardware, software, or a combination thereof.

It should be noted that those skilled in the art can clearly understand that, for the convenience and simplicity of description, for the specific working process of the electronic device described above, reference can be made to the corresponding processes of various steps in the aforementioned method, and will not be further repeated here.

Please refer to FIG. 2, the T-BOX obtains a charging pile position signal from the cloud and sends the signal to the cabin controller. The cabin controller calculates a navigation distance between the vehicle and a charging pile based on the charging pile position signal, which is used as a distance mileage signal and transmitted to the VCU and the main controller. The BCU obtains a remaining charge amount and a temperature of a power battery, which are respectively used as a battery charge amount signal and a battery temperature signal, and transmitted to the VCU and the main controller. The cabin controller and the large screen exchange permission signals and alarm signals. After receiving signals such as charge amount, battery temperature, and mileage sent by the cabin controller, the VCU, and the BCU, the main controller, based on control requirements of battery thermal management, controls accessories such as an electric compressor, an electric heater, a water pump, and a water valve in a thermal management system to turn on and operate, so as to meet the heating or cooling requirements of the power battery.

Second embodiment.

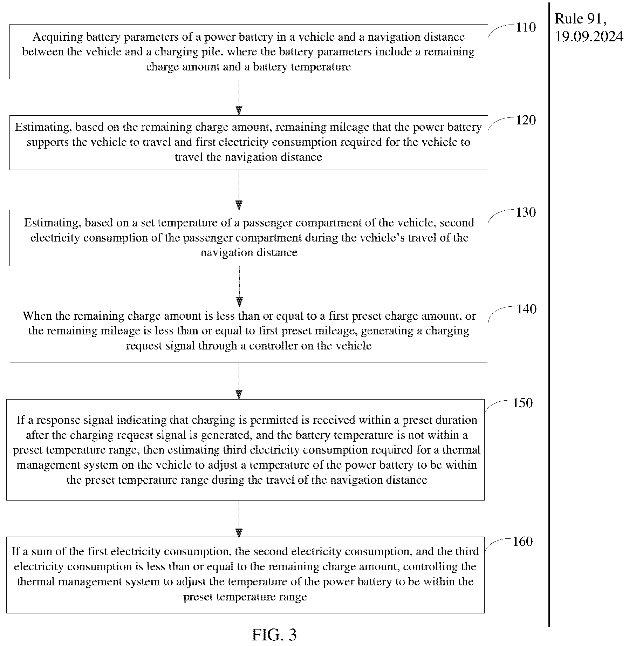

Please refer to FIG. 3, the present application also provides a battery thermal management method that can be applied to the above-mentioned electronic device, and the electronic device executes or implements various steps of the method. The battery thermal management method may include the following steps:

step 110, acquiring battery parameters of a power battery in a vehicle and a navigation distance between the vehicle and a charging pile, where the battery parameters include a remaining charge amount and a battery temperature;

step 120, estimating, based on the remaining charge amount, remaining mileage that the power battery supports the vehicle to travel and first electricity consumption required for the vehicle to travel the navigation distance;

step 130, estimating, based on a set temperature of a passenger compartment of the vehicle, second electricity consumption of the passenger compartment during the vehicle's travel of the navigation distance;

step 140, when the remaining charge amount is less than or equal to a first preset charge amount, or the remaining mileage is less than or equal to first preset mileage, generating a charging request signal through a controller on the vehicle;

step 150, if a response signal indicating that charging is permitted is received within a preset duration after the charging request signal is generated, and the battery temperature is not within a preset temperature range, then estimating third electricity consumption required for a thermal management system on the vehicle to adjust a temperature of the power battery to be within the preset temperature range during the travel of the navigation distance;

step 160, if a sum of the first electricity consumption, the second electricity consumption, and the third electricity consumption is less than or equal to the remaining charge amount, controlling the thermal management system to adjust the temperature of the power battery to be within the preset temperature range.

A detailed explanation of the steps involved in the battery thermal management method will be provided below.

In the present embodiment, the step 110, acquiring battery parameters of a power battery in a vehicle and a navigation distance between the vehicle and a charging pile includes:

acquiring the battery parameters of the power battery through sensing components on the vehicle, where the sensing components include a temperature sensor and a charge amount sensor;

acquiring the navigation distance between the vehicle and the charging pile from a server through a communication module on the vehicle.

In the present embodiment, the temperature sensor and the charge amount sensor of the sensing components are used to respectively collect the temperature and the remaining charge amount of the power battery. The method of obtaining remaining charge amount is a conventional method, which will not be repeated here.

In the present embodiment, the communication module can be a T-BOX, which can be used to establish a communication connection between the server and the vehicle for data exchange. For example, the communication module can send the real-time location of the vehicle to the server and obtain the location of a target charging pile from the server. For example, the server can flexibly select the target charging pile based on a current location of the vehicle, a destination where the vehicle travels to, and pre-stored locations of charging piles.

For example, the server may calculate a first distance between the vehicle and any charging pile, and a second distance between any charging pile and the destination, and then use a charging pile corresponding to the minimum sum of the first distance and the second distance as the target charging pile. In addition, the server may dynamically update the target charging pile based on the real-time location updates of the vehicle.

In the present embodiment, the step 120, estimating, based on the remaining charge amount, remaining mileage that the power battery supports the vehicle to travel and first electricity consumption required for the vehicle to travel the navigation distance, may include:

calculating, based on first power consumption of the vehicle at a first specified vehicle speed, and the remaining charge amount, a first duration required for the vehicle to deplete the remaining charge amount when traveling at the first specified vehicle speed, and determining, based on the first duration and the first specified vehicle speed, the remaining mileage;

calculating, according to the navigation distance and a second specified vehicle speed, a second duration required for the vehicle to travel the navigation distance, and determining, based on pre-calibrated second power consumption corresponding to the second specified vehicle speed, and the second duration, the first electricity consumption required for the vehicle to travel the navigation distance.

In the present embodiment, an operator may obtain a power consumption relationship table of a power drive system of the electric vehicle at different vehicle speeds, as well as system power consumption of a central control system on the vehicle, through pre-testing and pre-calibration. The system power consumption includes the power consumption of various instrument panels, display screens, and corresponding controllers in the vehicle. The drive system refers to a system composed of electrical components used for driving the vehicle to travel, such as the vehicle's wheel motors and steering motors.

The electronic device can obtain first driving power consumption at the first specified vehicle speed and second driving power consumption at the second specified vehicle speed based on a pre-calibrated relationship table between power consumption and vehicle speed by looking up the table. The first power consumption is the sum of the first driving power consumption and the system power consumption. The second power consumption is the sum of the second driving power consumption and the system power consumption.

The first specified vehicle speed may refer to an average vehicle speed of the vehicle in a recent period. The recent period may refer to a period of time such as within 24 hours or within one week prior to the current time.

The second specified vehicle speed may be the same as the first specified vehicle speed. Alternatively, the second specified vehicle speed may be an estimated vehicle speed based on a congestion situation from the vehicle to the charging pile. For example, if there is congestion on a road segment between the vehicle and the charging pile, then the average vehicle speed of various vehicles traveling on the road segment, as statistically calculated by the server during congestion, is taken as the second specified speed, and then the server will send the second specified vehicle speed to the vehicle. If there is no congestion on a road segment between the vehicle and the charging pile, the first specified vehicle speed can be used as the second specified vehicle speed. The method of determining whether there is congestion on a road segment is a conventional method, which will not be repeated here.

In the present embodiment, the calculation method for the remaining mileage L1 can be:

$$L1 = T1 * V1 \qquad (1)$$

$$v1 = S1 \div P1 \qquad (2)$$

where, T1 refers to the first duration, V1 refers to the first specified vehicle speed, S1 refers to the remaining charge amount, and P1 refers to the first power consumption.

The calculation method for the first electricity consumption S2 can be:

$$S2 = P2 * T2 \qquad (3)$$

$$T2 = L2 \div V2 \qquad (4)$$

where, P1 refers to the second power consumption, T2 refers to the second duration, L2 refers to the navigation distance, and V2 refers to the second specified vehicle speed.

In the step 130, the second electricity consumption can be denoted as S3, which refers to the electricity consumption of electrical appliances that can be selectively turned on during the vehicle's traveling process. For example, the electrical appliances that can be selectively turned on may include vehicle lights, an in-vehicle speaker, an air conditioner, etc. The power of the vehicle lights and the in-vehicle speaker is usually a fixed value, while the power of the air conditioner can be obtained based on different temperature settings by looking up a table. Therefore, the second electricity consumption can be estimated based on the sum of the power of the electrical appliances that can be selectively turned on, and the second duration required for the vehicle to travel the navigation distance.

As an example, if the vehicle is traveling during the day, the vehicle lights and the in-vehicle speaker may be defaulted to off, so only the electricity consumption of the air conditioner may be used as the second electricity consumption.

In the step 140, the charging request signal can be generated by the battery control unit or by the main controller. The first preset charge amount and the first preset mileage may be flexibly set according to actual situations. For example, the first preset charge amount may be 30% of the total charge amount, and the first preset mileage may be 100 kilometers.

In the present embodiment, before the step of estimating the third electricity consumption required for the thermal management system on the vehicle to adjust the temperature of the power battery to be within the preset temperature range during the travel of the navigation distance, the method further includes:

determining, based on a preset mapping relationship between temperature values and temperature intervals, a temperature interval where the battery temperature is located as a target temperature interval; deciding whether the battery temperature is within a preset temperature range corresponding to the target temperature interval, to obtain a decision result that indicates whether the battery temperature is within the preset temperature range.

Understandably, the preset temperature range corresponding to the power battery varies at different temperatures. The preset temperature range refers to an optimal temperature range that enables rapid charging of the power battery, considering different environmental temperatures and the heating/cooling capacity of the thermal management system. This preset temperature range may be obtained through calibration testing.

For example, if the temperature of the power battery is greater than or equal to 0°C, the corresponding preset temperature range (referring to the corresponding optimal temperature) is [20°C, 30°C]. If the temperature of the power battery is within the temperature range of [-10°C, 0°C), the corresponding preset temperature range (referring to the corresponding the optimal temperature) is [-5°C, 0°C]. If the temperature of the power battery is within the temperature range of [-30°C, -10°C), the corresponding preset temperature range (referring to the corresponding optimal temperature) is [-10°C, 0°C].

In the step 150, estimating the third electricity consumption required for the thermal management system on the vehicle to adjust the temperature of the power battery to be within the preset temperature range during the travel of the navigation distance may include:

determining, according to a minimum temperature difference between the battery temperature of the power battery and the preset temperature range, and a specific heat capacity of the power battery, a total amount of heat required to adjust the temperature of the power battery to the preset temperature range; determining, based on heat exchange efficiency between the thermal management system and the power battery, and the total amount of heat, the third electricity consumption.

Understandably, the third electricity consumption may be denoted as S4, which refers to the electricity consumption of the thermal management system. The thermal management system may include, but is not limited to, the above electric compressor, electric heater, water pump and so on, which can heat or cool the power battery to achieve temperature adjustment of the power battery. The total amount of heat can refer to the minimum amount of heat required to adjust the temperature of the power battery to be within a preset temperature range. The heat exchange efficiency between the thermal management system and the power battery may be obtained through calibration testing, which will not be repeated here.

In the step 160, if the sum of the first electricity consumption, the second electricity consumption, and the third electricity consumption is less than or equal to the remaining charge amount, that is, S2+S3+S4≤S1, it indicates that the remaining charge amount is relatively sufficient to ensure that the vehicle can travel to the charging pile normally and can still have more capacity to activate the thermal management system to adjust the temperature of the power battery.

In the present embodiment, the electronic device can estimate and calculate in real time the third duration T3 for the vehicle to travel to the target charging pile, and estimate the fourth duration T4 for adjusting the power battery from the current temperature to the preset temperature range. If T3=T4 is detected, the thermal management system is controlled to operate to adjust the temperature of the power battery, which helps reduce the electricity consumption of the thermal management system for pre-controlling the temperature.

In the present embodiment, the method may also include:

> if the sum of the first electricity consumption, the second electricity consumption, and the third electricity consumption is greater than the remaining charge amount, controlling the thermal management system not to operate;
> when a trigger signal indicating that the power battery starts charging is received, controlling operation of the thermal management system to adjust the temperature of the power battery to be within the preset temperature range.

Understandably, if S2+S3+S4>S1, it indicates that the remaining charge amount of the power battery is not sufficient. If the thermal management system is turned on in advance to adjust the temperature of the power battery, there is a safety risk of stalling due to energy exhaustion in the halfway during the vehicle's travel to the charging pile. Therefore, if S2+S3+S4>S1, the thermal management system is controlled not to operate. When a trigger signal indicating the start of charging the power battery is received, it means that the charging pile starts charging the vehicle. At this time, the thermal management system can be controlled to operate, so that the temperature of the power battery is adjusted to be within the preset temperature range (i.e. heating or cooling the power battery), which helps improve charging efficiency and shorten charging duration.

In the present embodiment, the method may further include:

if a response signal corresponding to the charging request signal is received within the preset duration after the charging request signal is generated, and the battery temperature is within the preset temperature range, then controlling the thermal management system not to operate.

Understandably, if the battery temperature of the power battery is within the preset temperature range, it means that there is no need to adjust the temperature of the power battery at this time, and the thermal management system may not operate.

In the present embodiment, the method may further include:

when the remaining charge amount is less than or equal to a second preset charge amount, or the remaining mileage is less than or equal to second preset mileage, outputting an alarm prompt indicating a low charge amount, where the second preset charge amount is less than the first preset charge amount, and the second preset mileage is less than the first preset mileage.

The second preset charge amount and the second preset mileage may be flexibly set according to actual situations. For example, the second preset charge amount may be 5% of the full charge amount, and the second preset mileage may be 30 kilometers. Outputting alarm prompts facilitates drivers' prompt awareness of critically low charge amount and informing them of the need to charge the vehicle in a timely manner.

In the present embodiment, the method may further include:

if a response signal indicating that charging is permitted is not received within the preset duration after the charging request signal is generated, controlling the thermal management system not to operate.

Understandably, when the charging request signal is generated, the driver can be reminded through a central control display screen in the form of a pop-up window whether to go to a nearby charging pile pushed by the server for charging. On the pop-up window, there may be virtual buttons for "Yes" and "No", as well as a countdown. If the user selects the "Yes" button before the countdown ends, a response signal will be generated and the step 150 will continue to be executed. If the user selects the 'No' button before the countdown ends, the thermal management system will be controlled not to operate. In addition, if the user does not select any button after the countdown ends, it can be defaulted to not charging, that is, at this time, the thermal management system will be controlled not to operate.

Based on the above design, in combination with the big data judgment of the server and interconnection of multiple systems, the electronic device can autonomously search for available charging areas by considering the remaining charge amount and the battery temperature, and automatically activate battery heating or cooling, thereby improving the automation and intelligence level of the vehicle. In addition, the electronic device automatically decides whether to activate battery heating or cooling in advance based on the planned driving mileage, the battery temperature, and the set temperature of the passenger compartment, thereby achieving optimal comprehensive energy consumption.

Third Embodiment

The present application also provides a battery thermal management apparatus, which includes at least one software functional module that can be stored in a storage module or solidified in an operating system (Operating System, OS) of the electronic device in the form of software or firmware (firmware). A processing module is configured to execute executable modules (such as the software functional module included in the battery thermal management apparatus, computer programs) stored in the storage module.

The battery thermal management apparatus includes an acquiring unit, a first estimating unit, a second estimating unit, a signal generating unit, a third estimating unit, and a thermal management unit. The functions of respective units can be as follows.

The acquiring unit is configured to acquire battery parameters of a power battery in a vehicle and a navigation distance between the vehicle and a charging pile, where the battery parameters include a remaining charge amount and a battery temperature.

The first estimating unit is configured to estimate, based on the remaining charge amount, remaining mileage that the power battery supports the vehicle to travel, and first electricity consumption required for the vehicle to travel the navigation distance.

The second estimating unit is configured to estimate, based on a set temperature of a passenger compartment of the vehicle, second electricity consumption of the passenger compartment during the vehicle's travel of the navigation distance.

The signal generating unit is configured to generate a charging request signal through a controller on the vehicle, when the remaining charge amount is less than or equal to the first preset charge amount, or the remaining mileage is less than or equal to first preset mileage.

The third estimating unit is configured to estimate third electricity consumption required for a thermal management system on the vehicle to adjust a temperature of the power battery to be within the preset temperature range during the travel of the navigation distance, if a response signal indicating that charging is permitted is received within a preset duration after the charging request signal is generated, and the battery temperature is not within a preset temperature range.

The thermal management unit is configured to control the thermal management system to adjust the temperature of the power battery to be within the preset temperature range, if a sum of the first electricity consumption, the second electricity consumption, and the third electricity consumption is less than or equal to the remaining charge amount.

Optionally, the acquiring unit may be further configured to:

acquire the battery parameters of the power battery through sensing components on the vehicle, where the sensing components include a temperature sensor and a charge amount sensor; and acquire the navigation distance between the vehicle and the charging pile from a server through a communication module on the vehicle.

Optionally, the first estimating unit may be further configured to:

calculate, based on first power consumption of the vehicle at a first specified vehicle speed, and the remaining charge amount, a first duration required for the vehicle to deplete the remaining charge amount when traveling at the first specified vehicle speed, and determine, based on the first duration and the first specified vehicle speed, the remaining mileage; calculate, according to the navigation distance and a second specified vehicle speed, a second duration required for the vehicle to travel the navigation distance, and determine, based on pre-calibrated second power consumption corresponding to the second specified vehicle speed, and the second duration, the first electricity consumption required for the vehicle to travel the navigation distance.

Optionally, the battery thermal management apparatus may further include a temperature interval determining unit and a deciding unit. Before the third estimating unit estimates the third electricity consumption required for the thermal management system on the vehicle to adjust the temperature of the power battery to be within the preset temperature range during the travel of the navigation distance, the temperature interval determining unit is configured to determine, based on a preset mapping relationship between temperature values and temperature intervals, a temperature interval where the battery temperature is located as a target temperature interval; and the deciding unit is configured to decide whether the battery temperature is within the preset temperature range corresponding to the target temperature interval, to obtain a decision result that indicates whether the battery temperature is within the preset temperature range.

Optionally, the third estimating unit may be further configured to:

determine, according to a minimum temperature difference between the battery temperature of the power battery and the preset temperature range, and a specific heat capacity of the power battery, a total amount of heat required to adjust the temperature of the power battery to be within the preset temperature range;

determine, based on heat exchange efficiency between the thermal management system and the power battery, and the total amount of heat, the third electricity consumption.

Optionally, the thermal management unit may be further configured to:

if the sum of the first electricity consumption, the second electricity consumption, and the third electricity consumption is greater than the remaining charge amount, control the thermal management system not to operate;

when a trigger signal indicating that the power battery starts charging is received, control operation of the thermal management system to adjust the temperature of the power battery to be within the preset temperature range.

Optionally, the thermal management unit may be further configured to:
if a response signal corresponding to the charging request signal is received within the preset duration after the charging request signal is generated, and the battery temperature is within the preset temperature range, control the thermal management system not to operate.

Optionally, the thermal management unit may be further configured to:
if a response signal indicating that charging is permitted is not received within the preset duration after the charging request signal is generated, control the thermal management system not to operate.

Optionally, the battery thermal management apparatus may further include a warning unit. The warning unit is configured to: when the remaining charge amount is less than or equal to a second preset charge amount, or the remaining mileage is less than or equal to second preset mileage, output an alarm prompt indicating a low charge amount, where the second preset charge amount is less than the first preset charge amount, and the second preset mileage is less than the first preset mileage.

An embodiment of the present application also provides a computer-readable storage medium. The computer-readable storage medium stores a computer program, which, when running on a computer, causes the computer to execute the battery thermal management method as described in the above embodiments.

Through the description of the above implementations, the person skilled in the art can clearly understand that the present application can be implemented through hardware or through software combined with a necessary general hardware platform. Based on this understanding, the technical solution of the present application can be embodied in the form of a software product. The software product can be stored in a non-volatile storage medium (which may be a CD-ROM, a USB flash drive, a portable hard drive, etc.) and includes several instructions to enable a computer device (which may be a personal computer, an electronic device, or a network device) to execute the methods described in various implementation scenarios of the present application.

In summary, the present application provides a battery thermal management method and apparatus, an electronic device, and a storage medium. The solution involves estimating first electricity consumption required for a vehicle to travel a navigation distance; estimating second electricity consumption of a passenger compartment during the vehicle's travel of the navigation distance; if a response signal indicating that charging is permitted is received within a preset duration after a charging request signal is generated, estimating third electricity consumption required for a thermal management system on the vehicle to adjust a temperature of a power battery to be within the preset temperature range during the travel of the navigation distance; performing pre-control of the temperature of the power battery through comparing the remaining charge amount and the sum of the first electricity consumption, the second electricity consumption, and the third electricity consumption. This approach facilitates improvement of the reliability and safety of pre-control over the temperature of the power battery. For example, when the remaining charge amount is sufficient, the temperature of the power battery can be adjusted in advance when the vehicle is traveling to the charging pile, which helps improve charging efficiency. In addition, in the case where the remaining charge amount of the power battery is too low, it can avoid the safety risk of mid-trip parking due to the inability of the remaining charge amount to support the electric vehicle to travel to the charging pile caused by adjusting the temperature of the power battery in advance.

In the embodiments provided in the present application, it should be understood that the disclosed apparatuses, systems, and methods may also be implemented in other ways. The embodiments of the apparatuses, systems, and methods described above are only illustrative. For example, the flowcharts and block diagrams in the accompanying drawings show the architectures, functions, and operations of possible implementations of the systems, methods, and computer program products according to multiple embodiments of the present application. In this regard, each block in a flowchart or block diagram can represent a module, a program segment, or a part of code that contains one or more executable instructions for implementing a specified logical function. It should also be noted that each block in the block diagram and/or flowchart, as well as combinations of blocks in the block diagram and/or flowchart, can be implemented using a dedicated hardware-based system that performs a specified function or action, or can be implemented using a combination of dedicated hardware and computer instructions. In addition, the functional modules in various embodiments of the present application can be integrated together to form an independent part, or each module can exist separately, or two or more modules can be integrated to form an independent part.

The above description is only the embodiments of the present application and is not intended to limit the protection scope of the present application. For the person skilled in the art, the present application may have various changes and variations. Any modifications, equivalent substitutions, improvements, etc. made within the spirit and principles of the present application shall be included within the protection scope of the present application.

## Claims

1. A battery thermal management method, wherein the method comprises:

   acquiring battery parameters of a power battery in a vehicle and a navigation distance between the vehicle and a charging pile, wherein the battery parameters comprise a remaining charge amount and a battery temperature;
   estimating, based on the remaining charge amount, remaining mileage that the power battery supports the vehicle to travel, and first electricity consumption required for the vehicle to travel the navigation distance;
   estimating, based on a set temperature of a passenger compartment of the vehicle, second electricity consumption of the passenger compartment during the vehicle's travel of the navigation distance;
   when the remaining charge amount is less than or equal to a first preset charge amount, or the remaining mileage is less than or equal to first preset mileage, generating a charging request signal through a controller on the vehicle;
   if a response signal indicating that charging is permitted is received within a preset duration after the charging request signal is generated, and the battery temperature is not within a preset temperature range, then estimating third electricity consumption required for a thermal management system on the vehicle to adjust a temperature of the power battery to be within the preset temperature range during the travel of the navigation distance;
   if a sum of the first electricity consumption, the second electricity consumption, and the third electricity consumption is less than or equal to the remaining charge amount, controlling the thermal management system to adjust the temperature of the power battery to be within the preset temperature range.

2. The method according to claim 1, wherein estimating, based on the remaining charge amount, the remaining mileage that the power battery supports the vehicle to travel, and the first electricity consumption required for the vehicle to travel the navigation distance comprises:

   calculating, based on first power consumption of the vehicle at the first specified vehicle speed, and the remaining charge amount, a first duration required for the vehicle to deplete the remaining charge amount while traveling at the first specified vehicle speed, and determining, based on the first duration and the first specified vehicle speed, the remaining mileage;
   calculating, according to the navigation distance and a second specified vehicle speed, a second duration required for the vehicle to travel the navigation distance, and determining, based on pre-calibrated second power consumption corresponding to the second specified vehicle speed, and the second duration, the first electricity consumption required for the vehicle to travel the navigation distance.

3. The control method according to claim 1 or 2, wherein estimating the third electricity consumption required for the thermal management system on the vehicle to adjust the temperature of the power battery to be within the preset temperature range during the travel of the navigation distance comprises:

   determining, according to a minimum temperature difference between the battery temperature of the power battery and the preset temperature range, and a specific heat capacity of the power battery, a total amount of heat required to adjust the temperature of the power battery to be within the preset temperature range;
   determining, based on heat exchange efficiency between the thermal management system and the power battery, and the total amount of heat, the third electricity consumption.

4. The method according to any one of claims 1 to 3, wherein, before the step of estimating the third electricity consumption required for the thermal management system on the vehicle to adjust the temperature of the power battery to be within the preset temperature range during the travel of the navigation distance, the method further comprises:

   determining, based on a preset mapping relationship between temperature values and temperature intervals, a temperature interval where the battery temperature is located as a target temperature interval;

deciding whether the battery temperature is within a preset temperature range corresponding to the target temperature interval, to obtain a decision result that indicates whether the battery temperature is within the preset temperature range.

5. The method according to any one of claims 1 to 4, wherein acquiring the battery parameters of the power battery in the vehicle and the navigation distance between the vehicle and the charging pile comprises:

acquiring the battery parameters of the power battery through sensing components on the vehicle, wherein the sensing components comprise a temperature sensor and a charge amount sensor;

acquiring the navigation distance between the vehicle and the charging pile from a server through a communication module on the vehicle.

6. The method according to any one of claims 1 to 5, wherein the method further comprises:

if the sum of the first electricity consumption, the second electricity consumption, and the third electricity consumption is greater than the remaining charge amount, controlling the thermal management system not to operate;

when a trigger signal indicating that the power battery starts charging is received, controlling operation of the thermal management system to adjust the temperature of the power battery to be within the preset temperature range.

7. The method according to any one of claims 1 to 6, wherein the method further comprises:
if a response signal corresponding to the charging request signal is received within the preset duration after the charging request signal is generated, and the battery temperature is within the preset temperature range, controlling the thermal management system not to operate.

8. The method according to any one of claims 1 to 7, wherein the method further comprises:
when the remaining charge amount is less than or equal to a second preset charge amount, or the remaining mileage is less than or equal to second preset mileage, outputting an alarm prompt indicating a low charge amount, wherein the second preset charge amount is less than the first preset charge amount, and the second preset mileage is less than the first preset mileage.

9. The method according to any one of claims 1 to 7, wherein the method further comprises:
if a response signal indicating that charging is permitted is not received within the preset duration after the charging request signal is generated, controlling the thermal management system not to operate.

10. A battery thermal management apparatus, wherein the apparatus comprises:

an acquiring unit, configured to acquire battery parameters of a power battery in a vehicle and a navigation distance between the vehicle and a charging pile, wherein the battery parameters comprise a remaining charge amount and a battery temperature;

a first estimating unit, configured to estimate, based on the remaining charge amount, remaining mileage that the power battery supports the vehicle to travel, and first electricity consumption required for the vehicle to travel the navigation distance;

a second estimating unit, configured to estimate, based on a set temperature of a passenger compartment of the vehicle, second electricity consumption of the passenger compartment during the vehicle's travel of the navigation distance;

a signal generating unit, configured to generate a charging request signal through a controller on the vehicle, when the remaining charge amount is less than or equal to the first preset charge amount, or the remaining mileage is less than or equal to first preset mileage;

a third estimating unit, configured to estimate third electricity consumption required for a thermal management system on the vehicle to adjust a temperature of the power battery to be within a preset temperature range during the travel of the navigation distance, if a response signal indicating that charging is permitted is received within a preset duration after the charging request signal is generated, and the battery temperature is not within the preset temperature range;

a thermal management unit, configured to control the thermal management system to adjust the temperature of the power battery to be within the preset temperature range, if a sum of the first electricity consumption, the second electricity consumption, and the third electricity consumption is less than or equal to the remaining charge amount.

11. An electronic device, wherein the electronic device comprises a processor and a memory coupled to each other, wherein the memory stores a computer program, which, when executed by the processor, causes the electronic device to execute the method according to any one of claims 1 to 9.

12. A computer-readable storage medium, wherein the computer-readable storage medium stores a computer program, which, when running on a computer, causes the computer to execute the method according to any one of claims 1 to 9.

13. A computer program, comprising program codes, wherein when a computer runs the computer program, the program codes execute the method according to any one of claims 1 to 9.

EP 4 703 190 A1

FIG. 1

FIG. 2

Rule 91,
19.09.2024

Acquiring battery parameters of a power battery in a vehicle and a navigation distance between the vehicle and a charging pile, where the battery parameters include a remaining charge amount and a battery temperature ⌐110

Estimating, based on the remaining charge amount, remaining mileage that the power battery supports the vehicle to travel and first electricity consumption required for the vehicle to travel the navigation distance ⌐120

Estimating, based on a set temperature of a passenger compartment of the vehicle, second electricity consumption of the passenger compartment during the vehicle's travel of the navigation distance ⌐130

When the remaining charge amount is less than or equal to a first preset charge amount, or the remaining mileage is less than or equal to first preset mileage, generating a charging request signal through a controller on the vehicle ⌐140

If a response signal indicating that charging is permitted is received within a preset duration after the charging request signal is generated, and the battery temperature is not within a preset temperature range, then estimating third electricity consumption required for a thermal management system on the vehicle to adjust a temperature of the power battery to be within the preset temperature range during the travel of the navigation distance ⌐150

If a sum of the first electricity consumption, the second electricity consumption, and the third electricity consumption is less than or equal to the remaining charge amount, controlling the thermal management system to adjust the temperature of the power battery to be within the preset temperature range ⌐160

FIG. 3

## INTERNATIONAL SEARCH REPORT

| | International application No. |
|---|---|
| | **PCT/CN2024/075620** |

| A. | CLASSIFICATION OF SUBJECT MATTER |
|---|---|

B60L58/12(2019.01)i; B60R16/023(2006.01)i

According to International Patent Classification (IPC) or to both national classification and IPC

| B. | FIELDS SEARCHED |
|---|---|

Minimum documentation searched (classification system followed by classification symbols)

IPC:B60L,B60R

Documentation searched other than minimum documentation to the extent that such documents are included in the fields searched

Electronic data base consulted during the international search (name of data base and, where practicable, search terms used)

CNTXT, ENTXTC, WPI: 电池, 加热, 温度, 电量, 距离, 里程, batter???, heat+, temperature?, distantce, mileage

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116620111 A (CHONGQING CHANG'AN AUTOMOBILE CO., LTD.) 22 August 2023 (2023-08-22)<br>claims | 1-13 |
| Y | CN 108312857 A (LETV CAR (BEIJING) CO., LTD.) 24 July 2018 (2018-07-24)<br>description, paragraphs 37-61, and figures 1-3 | 1-13 |
| Y | CN 116001652 A (XIAOMI AUTOMOTIVE TECHNOLOGY CO., LTD.) 25 April 2023 (2023-04-25)<br>description, paragraphs 87-99 and 176-180, and figures 1-6 | 1-13 |
| A | CN 110979103 A (WEICHAI POWER CO., LTD.; WEIFANG WEICHAI POWER TECHNOLOGY CO., LTD.) 10 April 2020 (2020-04-10)<br>entire document | 1-13 |
| A | CN 111769240 A (HUAREN YUNTONG (JIANGSU) TECHNOLOGY CO., LTD.) 13 October 2020 (2020-10-13)<br>entire document | 1-13 |
| A | CN 114537218 A (BEIJING ELECTRIC VEHICLE CO., LTD.) 27 May 2022 (2022-05-27)<br>entire document | 1-13 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 April 2024** | **02 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 703 190 A1**

**INTERNATIONAL SEARCH REPORT**

International application No.

**PCT/CN2024/075620**

**C. DOCUMENTS CONSIDERED TO BE RELEVANT**

| Category* | Citation of document, with indication, where appropriate, of the relevant passages | Relevant to claim No. |
|---|---|---|
| A | US 2020023750 A1 (HONDA MOTOR CO., LTD.) 23 January 2020 (2020-01-23) entire document | 1-13 |
| A | WO 2022111055 A1 (GREAT WALL MOTOR CO., LTD.) 02 June 2022 (2022-06-02) entire document | 1-13 |
| A | WO 2023029930 A1 (CHINA FAW CO., LTD.) 09 March 2023 (2023-03-09) entire document | 1-13 |

Form PCT/ISA/210 (second sheet) (July 2022)

17

**INTERNATIONAL SEARCH REPORT**
Information on patent family members

International application No.

**PCT/CN2024/075620**

| Patent document cited in search report | | | Publication date (day/month/year) | Patent family member(s) | | | Publication date (day/month/year) |
|---|---|---|---|---|---|---|---|
| CN | 116620111 | A | 22 August 2023 | None | | | |
| CN | 108312857 | A | 24 July 2018 | None | | | |
| CN | 116001652 | A | 25 April 2023 | None | | | |
| CN | 110979103 | A | 10 April 2020 | None | | | |
| CN | 111769240 | A | 13 October 2020 | None | | | |
| CN | 114537218 | A | 27 May 2022 | None | | | |
| US | 2020023750 | A1 | 23 January 2020 | JP | 2020014301 | A | 23 January 2020 |
| | | | | JP | 6989453 | B2 | 05 January 2022 |
| | | | | US | 11117491 | B2 | 14 September 2021 |
| WO | 2022111055 | A1 | 02 June 2022 | None | | | |
| WO | 2023029930 | A1 | 09 March 2023 | None | | | |

Form PCT/ISA/210 (patent family annex) (July 2022)

18

**REFERENCES CITED IN THE DESCRIPTION**

**Patent documents cited in the description**

- CN 202310487183